Europäisches Patentamt

European Patent Office

Office européen des brevets

(11) Veröffentlichungsnummer: **0 237 797**

**A1**

# (12) EUROPÄISCHE PATENTANMELDUNG

(21) Anmeldenummer: **87102057.4**

(22) Anmeldetag: **13.02.87**

(51) Int. Cl.⁴: **F16L 41/02** , F16L 47/00 , F01P 11/04

(30) Priorität: **17.02.86 DE 3604924**

(43) Veröffentlichungstag der Anmeldung:
**23.09.87 Patentblatt 87/39**

(84) Benannte Vertragsstaaten:
**DE ES FR GB IT SE**

(71) Anmelder: **METZELER KAUTSCHUK GMBH**
**Gneisenaustrasse 15**
**D-8000 München 50(DE)**

(72) Erfinder: **Kahlefeld, Hermann**
**Stolperstrasse 8**
**D-6944 Hemsbach(DE)**
Erfinder: **Schröter, Klaus**
**Drosselweg 8**
**D-6140 Bensheim(DE)**

(74) Vertreter: **Michelis, Theodor, Dipl.-Ing.**
**Gneisenaustrasse 15**
**D-8000 München 50(DE)**

(54) **Formschlauchverzweigung, insbesondere für einen Kraftfahrzeug-Kühlwasserschlauch.**

(57) Bei einer Formschlauchverzweigung, insbesondere für einen Kraftfahrzeug-Kühlwasserschlauch, mit einem Verzweigungsrohrstück aus Metall oder Kunststoff (1), an dessen freien Rohrstutzen (2,3,4) ausvulkanierte Schlauchenden (15,16) dauerhaft festgelegt sind, ist zur einfachen und dennoch dauerhaften Verbindung und Festlegung der Schlauchenden (15,16) ohne Vulkanisation erfindungsgemäß vorgesehen, daß der den Ringspalt (5,6,7) nach außen begrenzende Ringabschnitt (8,9,10) gegenüber dem innenliegenden Ringabschnitt (11,12,13) zur freien Stirnseite hin übersteht und daß die in den Ringspalt (5,6,7) eingeschobenen Schlauchenden (15,16) mittels einer kaltvernetzenden Klebermasse dauerhaft befestigt sind.

## Formschlauchverzweigung, insbesondere für einen Kraftfahrzeug-Kühlwasserschlauch

Die Erfindung betrifft eine Formschlauchverzweigung, insbesondere für einen Kraftfahrzeug-Kühlwasserschlauch, mit einem Verzweigungsrohrstück aus Metall oder Kunststoff, an dessen freien Rohrstutzen ausvulkanisierte Schlauchenden dauerhaft festgelegt sind.

Eine derartige Formschlauchverzweigung ist aus der DE-OS 32 39 623 bekannt. Danach werden über die aufgeweiteten Enden der Rohrstutzen Schlauchabschnitte geschoben, nachdem die Rohrstutzen auf ihrer Außenseite mit einem Haftvermittler und einer vulkanisierbaren Klebermasse versehen sind. Bei einer derart aufgebauten Verzweigung besteht aber die Gefahr, daß die aufgebrachte Klebermasse beim Aufschieben der Schlauchenden weggedrückt wird und daß sich dadurch nur eine unzureichende Verbindung und Haftung ergibt. Darüber hinaus können insbesondere bei Schwellbeanspruchungen die Schlauchbereiche an den Kanten vom Rohrstutzen mit der Zeit abgehoben werden, so daß die Schlauchverzweigung undicht wird. Außerdem bedeutet das Ausvulkanisieren der montierten Schlauchverzweigung einen zusätzlichen geräte-und arbeitstechnischen Aufwand.

Der Erfindung liegt daher die Aufgabe zugrunde, eine Formschlauchverzweigung der eingangs genannten Art zu schaffen, die einfach herzustellen ist, die eine optimale Sicherheit gegen Undichtwerden bietet und bei der darüber hinaus eine thermische Nachbehandlung nicht erforderlich ist.

Zur Lösung dieser Aufgabe ist erfindungsgemäß vorgesehen, daß in die freien Rohrstutzen von ihrer Stirnseite her achsial verlaufende Ringspalte eingelassen sind und daß die in den Ringspalt eingeschobenen Schlauchenden mittels einer kaltvernetzenden Klebermasse dauerhaft befestigt sind.

Mit einer derart ausgebildeten Schlauchverzweigung ist also auf optimale Weise eine dauerhafte Befestigung der zu verbindenden Schlauchabschnitte gewährleistet und darüber hinaus werden alle auftretenden Kräfte sicher beherrscht, so daß ein Undichtwerden einer derartigen Verzweigung praktisch nicht möglich ist.

Zweckmäßigerweise steht der äußere Ringabschnitt um etwa 1/5 der Ringspalttiefe gegenüber dem inneren Ringabschnitt über, um damit radiale Kräfte zusätzlich aufzunehmen.

Zur besseren Haftung kann die Außenfläche des inneren Ringabschnittes mit einer gewindeförmigen Rauhung versehen sein.

Zur sicheren Halterung ist es ferner zweckmäßig und ausreichend, wenn die radiale Höhe des Ringspaltes der Wandstärke des einzuschiebenden Schlauchendes entspricht. Dabei sollten vom innenliegenden Ende der Ringspalte radiale Entlüftungsbohrungen nach außen führen.

Anhand einer schematischen Zeichnung sind Aufbau und Wirkungsweise eines Ausführungsbeispiels näher erläutert.

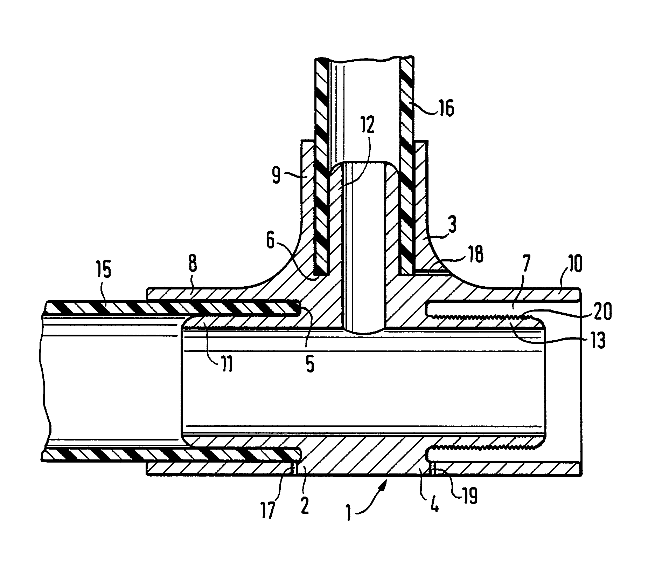

Die einzige Figur zeigt dabei einen Längsschnitt durch ein derartiges Verzweigungsrohrstück mit zwei eingesetzten Schlauchenden, während das dritte Anschlußende freigelassen ist.

In der Figur ist als einfachstes Beispiel für eine Formschlauchverzweigung ein Schlauch mit einem einzigen Abzweig, d.h. einer T-förmigen Schlauchverzweigung, gezeigt, da hieran das erfinderische Prinzip am einfachsten erläutert werden kann. Diese T-förmige Schlauchverzweigung wird primär durch ein T-förmiges Rohrstück 1 mit den freien Rohrstutzen 2, 3 und 4 gebildet, wobei der Rohrstutzen 3, der den eigentlichen Abzweig bildet, im Winkel von 90° an die durchgehende Leitung angeschlossen ist. Dieser Stutzen 3 kann aber auch in jedem beliebigen anderen Winkel entsprechend der geforderten Ausgestaltung des Abzweigs an die Hauptleitung angesetzt werden.

Jeder dieser Stutzen 2, 3 und 4 weist nunmehr von seiner Stirnseite her einen achsial verlaufenden Ringspalt 5, 6 und 7 auf. Dabei ist es besonders zweckmäßig, daß der den Ringspalt nach außen begrenzende Ringabschnitt 8, 9 bzw. 10 gegenüber dem innenliegenden Ringabschnitt 11, 12 bzw. 13 zur freien Stirnseite hin übersteht. Dieser Überstand sollte in der Größenordnung von etwa 1/5 der Tiefe der jeweiligen Ringspalte 5, 6 oder 7 sein.

Diese Ringspalte 5, 6 und 7 weisen in etwa eine radiale Höhe auf, die der Wandstärke der einzuschiebenden Schlauchenden entspricht, d.h. sie sollen dem Schlauch gegenüber nur ein geringes Spiel aufweisen. Wie aus der Figur ersichtlich, sind jeweils ein Schlauchende 15 in den Ringspalt 5 und ein Schlauchende 16 in den Ringspalt 6 eingeschoben. Vorher sind die Schlauchenden innen und außen über den Bereich ihrer Abdeckung im Ringspalt mit einer entsprechenden Klebermasse zur Haftung bestrichen. Als Klebermasse wird zweckmäßigerweise z.B. ein kaltvernetzender Chloroprenkleber verwendet. Es ist aber auch jeder andere Kleber möglich, der eine gute Verbindung zwischen Gummi und Metall bzw. Kunststoff, d.h. dem Werkstoff des Rohrverzweigungsstückes 1, herstellt und der insbesondere ohne thermische

Nachbehandlung nachvernetzt. Dieser Klebereinstrich der Schlauchenden übernimmt dann bei der Montage, d.h. dem Einschieben der Schlauchenden, gleichzeitig die Funktion eines Gleitmittels.

Zum leichteren Einstrecken der Schlauchenden in die Ringspalte 5, 6 und 7 sind darüber hinaus jeweils am Ende dieser Ringspalte noch radiale Entlüftungsbohrungen 17, 18 und 19 vorgesehen. Gleichzeitig kann die Innenseite der Ringspalte - wie das am rechten Ringspalt 7 gezeigt ist -mit einer auf der Außenseite des inneren Ringabschnittes 13 liegenden gewindeförmigen Rauhung 20 versehen sein, um damit eine bessere Fixierung der Schlauchenden zu erreichen.

Durch die nach vorn überstehenden, außenliegenden Ringabschnitte 8, 9 bzw. 10 wird sichergestellt, daß radiale Kraftkomponenten aus dem Schlauch, die insbesondere bei Schwellbeanspruchungen auftreten, sicher abgestützt und aufgefangen werden, so daß ein Ablösen des Schlauches praktisch nicht mehr möglich ist.

Insgesamt ergibt sich also eine Schlauchverzweigung, die sehr einfach und unabhängig von Maschinen oder Pressen hergestellt werden kann und bei der insbesondere eine üblicherweise notwendige Vulkanisation und die damit verbundenen Risiken vermieden werden können.

Bei dem dargestellten Ausführungsbeispiel ist als ein fachste Form die Ausbildung einer T-förmigen Schlauchverzweigung gezeigt. Es ist aber nach dem gleichen Grundprinzip möglich, bei-spielsweise auch kreuzförmige Schlauchverzwei-gungen zu schaffen oder aber solche, bei denen an einer oder mehreren dicht nebeneinander liegenden Stellen mehrere Abzweige abgehen, wobei diese Abzweige in ein-und derselben oder aber auch in mehreren Ebenen liegen und einen von 90° abweichenden Winkel zum Hauptrohr aufwei-sen können.

## Ansprüche

1. Formschlauchverzweigung, insbesondere für einen Kraftfahrzeug-Kühlwasserschlauch, mit einem Verzweigungsrohrstück aus Metall oder Kunststoff, an dessen freien Rohrstutzen ausvulkanisierte Schlauchenden dauerhaft festgelegt sind, dadurch gekennzeichnet, daß in die freien Rohrstutzen - (2,3,4) von ihrer Stirnseite her achsial verlaufende Ringspalte (5,6,7) eingelassen sind und daß die in den Ringspalt (5,6,7) eingeschobenen Schlauchenden (15,16) mittels einer kaltvernetzenden Klebermasse dauerhaft befestigt sind.

2. Formschlauchverzweigung nach Anspruch 1, dadurch gekennzeichnet, daß der äußere Ringabschnitt (8,9,10) um etwa 1/5 der Ringspalttiefe gegenüber dem inneren Ringabschnitt (11,12,13) übersteht.

3. Formschlauchverzweigung nach Anspruch 1, dadurch gekennzeichnet, daß die Außenfläche des inneren Ringabschnittes (13) mit einer gewindeförmigen Rauhung (29) versehen ist.

4. Formschlauchverzweigung nach Anspruch 1 bis 3, dadurch gekennzeichnet, daß die radiale Höhe des Ringspaltes (5,6,7) der Wandstärke des einzuschiebenden Schlauchendes (15,16) entspricht.

5. Formschlauchverzweigung nach Anspruch 1 bis 4, dadurch gekennzeichnet, daß vom innenliegenden Ende der Ringspalte (5,6,7) radiale Entlüftungsbohrungen (17,18,19) nach außen führen.

6. Formschlauchverzweigung nach Anspruch 1 bis 5, dadurch gekennzeichnet, daß als Kleber-masse ein kaltvernetzender Chloroprenkleber ver-wendet ist.